Europäisches Patentamt

European Patent Office

Office européen des brevets

(19)

(11) **EP 0 403 695 B2**

(12) **NEUE EUROPÄISCHE PATENTSCHRIFT**

(45) Veröffentlichungstag und Bekanntmachung des Hinweises auf die Entscheidung über den Einspruch:
**04.02.1998 Patentblatt 1998/06**

(45) Hinweis auf die Patenterteilung:
**30.03.1994 Patentblatt 1994/13**

(51) Int. Cl.$^6$: **B03B 9/06**, C22B 7/00

(21) Anmeldenummer: **89121442.1**

(22) Anmeldetag: **20.11.1989**

(54) **Verfahren und Anlage zur Verwertung von Geräteschrott**

Process and plant for recycling scrap appliances

Procédé et installation pour la récupération des rebuts d'appareils

(84) Benannte Vertragsstaaten:
**AT BE CH DE ES FR GB GR IT LI LU NL SE**

(30) Priorität: **19.06.1989 CH 2278/89**

(43) Veröffentlichungstag der Anmeldung:
**27.12.1990 Patentblatt 1990/52**

(73) Patentinhaber: **ENVIRO EC AG**
**6300 Zug (CH)**

(72) Erfinder: **Alavi, Kamal**
**CH-6318 Walchwil (CH)**

(74) Vertreter:
**Kägi, Otto**
**Patentanwalt**
**c/o Com Pat AG**
**Gubelstrasse 17**
**6300 Zug (CH)**

(56) Entgegenhaltungen:
**EP-A- 0 106 997**     **DE-A- 3 347 230**
**DE-C- 3 239 135**     **DE-C- 3 313 872**
**US-A- 3 848 813**     **US-A- 3 905 556**
**US-A- 4 483 827**

- **CONSERVATION & RECYCLING, Band 10, Nr. 1,1987, Seiten 1-13, Pergamon Journals Ltd, Oxford, GB; R.S. KAPLAN et al.:"Review article no. 13. Recycling of metals"**
- **"Precious Metals Recovery from Electronic Scrap", Proceedings of the seventh Mineral Waste Symposium, 20.-21. Oct. 1980, S. 184-197**
- **"Distribution and Analyses of Gold and Silver in Mechanically Processed Mixed Electronic Scrap", Report of investigations 8788/1983**

EP 0 403 695 B2

## Beschreibung

Die Erfindung betrifft ein Verfahren zur Verwertung von nichtmetallische und metallische Anteile enthaltendem Geräteschrott, wobei man das Schrottmaterial stufenweise und abwechselnd mechanisch zerkleinert und in Fraktionen trennt, und wobei man eine Grobzerkleinerung und eine anschliessende magnetische Separierung des Schrottgemisches in eine magnetische Gemischfraktion und eine nichtmagnetische Gemischfraktion durchführt.

Solcher Geräteschrott fällt z.B. in Form von defekten oder ausgedienten elektrischen und elektronischen Geräten (Computer, Peripheriegeräte, Unterhaltungselektronik, elektrische Schalt- und Regelapparate), wissenschaftlichen Apparaten, Ausschuss von Komponenten, aber auch von Kabeln und Verdrahtungen aller Art, Abfällen von Halbleiterfabrikaten (z.B. kupferkaschierte Kunststoffplatten) usw. an. Die Zusammensetzung solcher Art von Schrott ist äusserst vielfältig und heterogen, d.h. die verschiedensten Werkstoffe treten in sehr unregelmässiger und meist feiner Verteilung auf. Im metallischen Anteil finden sich hauptsächlich Eisen, Kupfer, Aluminium, Bunt- und Lötmetalle sowie verschiedene Edelmetalle (Gold, Silber, Platin, Palladium usw.). Der nichtmetallische Anteil setzt sich im wesentlichen aus verschiedenartigen Kunststoffen (teilweise Faserverstärkt), Keramik, Glas usw. zusammen.

Der Anfall Von solchem meist voluminösen Geräteschrott ist bereits jetzt hoch (weltweit auf etwa 300'000 Tonnen jährlich geschätzt). Er ist offensichtlich in rascher Zunahme begriffen angesichts der technischen Entwicklung der Elektronik und Informatik und hoher Zuwachsraten im Gerätemarkt, was beides zu einem raschen "Generationenwechsel" von Geräten führt.

An sich wäre eine Rückgewinnung von mancherlei wertvollen, bei der Geräteherstellung verwendeten und unentbehrlichen Werkstoffen verlockend; insbesondere moderne elektronische Geräte und deren Komponenten enthalten z.B. nicht unerhebliche Mengen von Edelmetallen als Kontakt- und Leitermaterialien. Eine solche Rückgewinnung hat sich allerdings als sehr schwierig erwiesen und konnte bisher nicht in zufriedenstellender Weise gelöst werden. Natürlich wäre eine manuelle Verarbeitung bzw. ein Aussortieren angesichts der anfallenden Mengen völlig unrealistisch; höchstens ein Ausbau von Funktionseinheiten, z.B. bestückten Leiterplatten aus grossen Gehäusen oder etwa das Abtrennen grösserer Glasteile (Glaskolben von Sichtgeräten usw.) kann in Betracht gezogen werden.

Bisher wurde eine Geräteschrott-Verwertung meist in der Weise versucht, dass die Schrotteinheiten zwecks Volumenverminderung zertrümmert und dann in einen Brennofen gegeben wurden. Der brennbare Anteil wurde darin verglüht, und die zurückbleibende, im wesentlichen Metalloxide und stark verunreinigte Metallteile enthaltende "Asche" wurde dann reduzierend erschmolzen und hierauf in mehreren Schritten pyrometallurgisch raffiniert. Dieses Verfahren hat jedoch einen recht erheblichen Energiebedarf und ist vor allem mit einem hohen Ausstoss von gefährlichen Luftschadstoffen verbunden. Infolge der hohen Anlage- und

Betriebskosten (Ofen und Schmelzanlagen, Hochkamin, Abgasreinigung usw.) ist die Wirtschaftlichkeit derartiger Verfahren in Frage gestellt, und wegen der trotz kostspieliger Gegenmassnahmen noch bestehenden Umweltbelastung sind sie kaum mehr tragbar.

Bei einem anderen, aus der DE-A-33 47 230 bekannten Verfahren der eingangs genannten Art wird das Schrottmaterial, z.B. Fernsehgeräte, zweistufig zerkleinert, und das Schrottgemisch wird mittels Magnetscheidung in magnetische und unmagnetische Bestandteile getrennt. Aus der Unmagnetischen Fraktion werden dann gegebenenfalls Pappe- und Papierteilchen mittels Windsichtung entfernt, oder es wird die ganze Fraktion hierauf in einer Schwimm-Sink-Anlage z.B. durch eine Suspension von Magnetit und Wasser geleitet und in eine leichte und eine schwere Fraktion getrennt. Beide Fraktionen müssen anschliessend getrocknet werden und werden dann elektrostatisch z.B. einerseits in "Holz, Papier, Pappe" und "Plastik", bzw. andererseits in "NE- Metalle" und "Glas" getrennt. Bei diesem Verfahren fallen also verschiedene Arten von Nichtmetallen getrennt sowie NE-Metalle an. Die magnetische Fraktion samt deren Verunreinigungen, die bei der Windsichtung abgetrennten Bestandteile und insbesondere die Staubanteile erfahren keine weitere Beachtung oder Weiterverarbeitung. Ueber den erzielten Trennungsgrad (Reinheit) der Fraktionen und über den Grad der Material-Rückgewinnung enthält die genannte Veröffentlichung keine Angaben. Vor allem aber ist die angewendete Schwimm-Sink-Trennung (Flotation) nachteilig: Der Betrieb der Anlage mit der laufenden Aufbereitung der Trennflüssigkeit und insbesondere das nachfolgende Trocknen beider Fraktionen benötigen viel Energie und verursachen hohe Betriebskosten; die zum Beschweren der Trennflüssigkeit benötigten Mineralien oder Chemikalien werden teilweise mit dem Trenngut ausgetragen und belasten wiederum die Weiterverarbeitung.

Der vorliegenden Erfindung liegt die Aufgabe zugrunde, ausgehend von einem Verfahren der eingangs genannten Art im Geräteschrott enthaltene, verwertbare Stoffe auf wirtschaftliche Weise und mit geringstmöglicher Umweltschädigung der Wiederverwendung zuzuführen und verbleibende Anteile - im wesentlichen Nichtmetalle - deponiefähig zu machen. Diese Aufgabe wird erfindungsgemäss mit dem Verfahren nach Patentanspruch 1 gelöst.

Eine erfindungsgemässe Anlage zur Durchführung dieses Verfahrens geht aus von mindestens einem ersten und einem zweiten mechanischen Zerkleinerungsaggregat und einem bezüglich Materialfluss zwischen diesen Aggregaten angeordneten Magnetseparator. Die Anlage ist erfindungsgemäss dadurch gekennzeichnet,

- dass zur Trennung des vom Magnetseparator ausgeschiedenen Gemisches aus magnetischer Metallfraktion und

EP 0 403 695 B2

Nichtmetallfraktion mindestens ein erstes mechanisch-physikalisches Trennagregat,

- und zur Trennung des nach dem Magnetseparator anfallenden, durch das zweite Zerkleinerungsaggregat geführten Gemisches aus nichtmagnetischer Metallfraktion und Nichtmetallfraktion mindestens ein zweites mechanisch-physikalisches Trennaggregat vorhanden ist,
- und dass ferner Mittel zur Rückführung von beim Zerkleinern des Geräteschrotts vor der magnetischen Separierung sowie der nichtmagnetischen Gemischfraktion nach der magnetischen Separierung anfallendem Staub in eines der Trennaggregate vorhanden sind.

Zweckmässige Varianten des vorgenannten Verfahrens sind in den Ansprüchen 2 bis 8, und besondere Ausgestaltungen der erfindungsgemässen Anlage sind in den Ansprüchen 10 bis 16 angegeben.

Mit der Erfindung wird das schwierige und dringende Problem der Beseitigung von Geräteschrott auf überraschend effiziente Weise gelöst, indem eine hohe Rückgewinnungsquote wertvoller Bestandteile mit vergleichsweise geringem Energieaufwand und praktisch ohne Anfall von umweltschädigenden Stoffen oder Abfallprodukten erreicht wird. Zudem sind die auf diese Weise gewonnenen Metallfraktionen besonders dazu geeignet, der pyrolysefreien, nasschemischen und/oder elektrolytischen Trennung zugeführt zu werden.

Nachstehend wird die Erfindung anhand eines Ausführungsbeispiels mit Varianten und im Zusammenhang mit der Zeichnung näher erläutert.

Fig. 1 zeigt schematisch den Verfahrensablauf bzw. den Aufbau einer Anlage zur Verarbeitung von Geräteschrott bis zur Darstellung der drei Fraktionen in Granulat- und Staubform, und

Fig. 2 ist die schematische Darstellung einer nasschemischen und elektrolytischen Weiterverarbeitung und Separierung der Metallfraktionen.

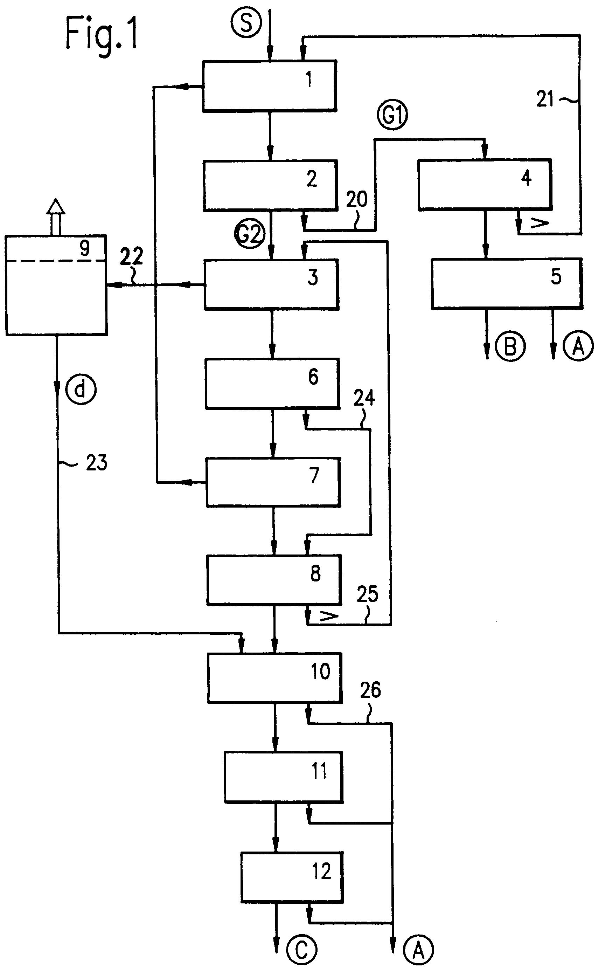

Gemäss der schematischen Darstellung nach Fig. 1 wird Geräteschrott S einem ersten Zerkleinerungsaggregat 1 zugeführt, z.B. einer Hammermühle, in welcher eine Grobzerkleinerung des Schrottes in Bruchstücke von maximal etwa 3 bis 5 cm erfolgt. Diese Bruchstücke werden dann einem Magnetseparator 2 zugeleitet. Bei der magnetischen Separation erfolgt eine Trennung in eine magnetische Gemischfraktion G1 und eine nichtmagnetische Gemischfraktion G2. Die als "magnetisch" bezeichnete Gemischfraktion G1, welche vom Magnetseparator 2 ausgeschieden wird, enthält Metallpartikel mit vorwiegend ferromagnetischem Anteil (Metalle und Legierungen der Eisengruppe), die aber natürlich mit verschiedenen anderen Metallen verbunden sind. Beide Gemischfraktionen G1 und G2 führen auch einen erheblichen Anteil an nichtmetallischen Teilen mit sich.

Entsprechend der Linie 20 in Fig. 1 wird die magnetische Gemischfraktion G1 einer Siebvorrichtung 4, beispielsweise einem Rüttelsieb mit einer Maschenweite von etwa 2 cm zugeführt. Der Siebrückbehalt (Partikelgrösse von mehr als 2 cm) wird über den Pfad 21 in die Grobzerkleinerung 1 rezirkuliert. Der das Sieb 4 passierende Anteil von G1 wird dagegen einem mechanischphysikalischen Trennaggregat 5 zugeführt. In diesem erfolgt eine Trennung in die magnetische Metallfraktion B und eine nichtmetallische Fraktion A, welche Fraktionen beide in Granulatform mit einem gewissen Staubanteil anfallen.

Dem Magnetseparator 2 ist eine weitere Zerkleinerungsstufe 3 für die nichtmagnetische Gemischfraktion G2 nachgeschaltet, d.h. der Magnetseparator befindet sich bezüglich Materialfluss zwischen dem ersten Zerkleinerungsaggregat 1 und dem zweiten Zerkleinerungsaggregat 3. Im Letzteren, vorzugsweise einem sogenannten Schredder mit rotierendem Schlagmesser, erfolgt die weitere Zerkleinerung der Fraktion G2 in Partikel mit einer Grösse von maximal etwa 3 mm. Diese Partikel werden anschliessend entstaubt, gemäss Fig. 1 in einer Staubabscheideanordnung, bestehend aus den Einheiten 6 und 7. Als Einheit 6 wird zweckmässigerweise ein Windsichter und als Einheit 7 ein Zyklon verwendet. Anschliessend an die Staubabscheideanordnung 6,7 wird das entstaubte Partikelgemisch einer Siebvorrichtung 8, z.B. einem Rüttelsieb mit einer Maschenweite von etwa 3 mm zugeleitet. In der Staubabscheideanordnung besorgt der Windsichter 6 zunächst eine Trennung in schwere Partikel einerseits und leichte Partikel mit Staub anderseits, wobei nur der Leichtanteil über den Zyklon 7 geführt wird; die schweren Partikel gelangen dagegen unter Umgehung des Zyklons direkt in das Sieb 8 (Pfad 24). Der Siebrückbehalt der Siebvorrichtung 8 (Partikelgrösse über 3 mm) wird über den Pfad 25 in das vorangehende Aggregat 3 zur nochmaligen Zerkleinerung rezirkuliert. Das das Rüttelsieb 8 passierende Partikelgemisch gelangt dagegen auf ein zweites mechanischphysikalisches Trennaggregat 10.

Wie in Fig. 1 mit den Linien 22 angedeutet, ist es zweckmässig, dass man das beim Zerkleinern und - sofern zwischen dem Zerkleinerungsaggregat 3 und dem Trennaggregat 10 eine Entstaubung und Siebung erfolgt - auch das dort anfallende Staubgemisch pneumatisch sammelt und einem Luftfilter 9 zuleitet. Das im Luftfilter 9 pneumatisch gesammelte Staubgemisch d wird dann ebenfalls dem Trennaggregat 10 zugeführt (Pfad 23). Es ist zu erwähnen, dass anstelle der Staubabscheideanordnung mit Windsichter 6 und Zyklon 7 allenfalls auch andere Anordnungen in Frage kommen, z.B. abhängig vom anfallenden Schrott S, vom verwendeten Zerkleinerungsaggregat 3 oder der Art des mechanisch-physikalischen Trennaggregates 10; z.B. kann nur ein Zyklon oder nur ein Windsichter oder eine andere Entstaubungseinheit in Frage kommen.

3

Zur mechanisch-physikalischen Trennung der (weiter zerkleinerten und entstaubten) nichtmagnetischen Mischfraktion G2 können mehrere Trennstufen erforderlich sein, wie durch die Einheiten 10, 11 und 12 angedeutet. In jeder Stufe wird ein (abnehmender) Anteil der nichtmetallischen Fraktion A ausgeschieden (Pfad 26), so dass schliesslich die nichtmagnetische Metallfraktion C übrig bleibt. Beide Fraktionen A,C fallen wiederum in Granulatform mit kleinerem oder grösserem Staubanteil an. In einer kontinuierlich arbeitenden Anlage wird man zweckmässigerweise, wie in Fig. 1 dargestellt, mehrere Trennaggregate 10, 11, 12 in Kaskade anordnen. Es ist jedoch auch denkbar, die Metallpartikel jeweils chargenweise durch das gleiche Trennaggregat zu rezirkulieren und dabei fortschreitend zu reinigen. Uebrigens ist zu erwähnen, dass auch zur Trennung der magnetischen Gemischfraktion G1 mehrere Trennstufen erforderlich sein können.

Zum mechanisch-physikalischen Separieren der beiden Gemischfraktionen G1 und G2 (Aggregate 5 bzw. 10-12) sind insbesondere elektrostatisch wirkende Trennstufen, d.h. an sich bekannte elektrostatisch arbeitende Separatoren geeignet (zuweilen auch als "elektrodynamische" Separatoren bezeichnet). Bei mehreren in Kaskade angeordneten Einheiten können Separatoren vom selben Typ, gegebenenfalls mit fortschreitend kleinerer Verarbeitungskapazität, verwendet werden.

Eine Anlage gemäss Fig. 1 wurde als Prototyp für eine stündliche Verarbeitungsleistung von 500 kg Geräteschrott, vorwiegend bestückte Elektronik-Leiterplatten, Abfälle von kupferkaschierten, glasfaserverstärkten Kunststoffplatten usw. ausgelegt. Hierfür wurde eine Hammermühle 1 mit einer Antriebsleistung von 65 kW eingesetzt. Die Durchsatzleistung der weiteren Aggregate richtet sich nach der fortschreitenden mengenmässigen Aufteilung der Materialströme. Die gesamte Leistungsaufnahme beim Betrieb der Anlage (Antriebsleistungen der einzelnen Aggregate) beträgt weniger als 100 kW. Die verwendeten elektrostatischen Separatoren arbeiten mit einer Gleichspannung von 24 kV bei einer Wechselstrom-Blindleistung von 45 kVA.

Die nachstehende Tabelle 1 gibt eine ungefähre Aufteilung der Materialströme an, die natürlich stark vom anfallenden Schrott abhängt (Prozentangaben bezogen auf die Schrottmenge):

## Tabelle 1

S =

| | | |
|---|---|---|
| G1 | magnetische Gemischfraktion | 15 % |
| G2 | nichtmagnetische Gemischfraktion | 80 % |
| d | Filterstaub | 5 % |

} 100 %

| | | |
|---|---|---|
| A | nichtmetallische Fraktion | 72,6 % |
| B | magnetische Metallfraktion | 10 % |
| C | nichtmagnetische Metallfraktion | 17,4 % |

} 100 %

Nach Verarbeitung von einer Tonne Elektronikschrott der vorgenannten Art ergaben sich die nachstehenden Anteile in den beiden Metallphasen (Prozentangaben bezogen auf die Schrottmenge):

Tabelle 2

| Fe | 5 % |
|---|---|
| Ni | 2,2 % |
| Sn + Pb | 2 % |
| Al | 3 % |
| Cu | 15 % |
| Ag | 0,15 % |
| Au | 0,06 % |
| Pd | 0,02 % |
| nichtmet. Fraktion | 72,57 % (weniger als 0,1 % Metallanteil) |
| | 100 % |

Die beiden Metallfraktionen B und C werden nach dem Verfahren und mit einer Anlage gemäss Fig. 1 durch stufenweises und abwechselndes mechanisches Zerkleinern und magnetisches sowie mechanischphysikalisches, trockenes Separieren gewonnen und in Granulat- und Staubform dargestellt. Die in der Anlage verwendeten Aggregate sind soweit erforderlich "gekapselt", und der anfallende Staub wird gesammelt und in den Materialstrom zurückgeführt. Es werden somit keine nennenswerten Stoffanteile in die Umgebung ausgestossen oder verloren, sondern in den Fraktionen A, B und C ist praktisch die gesamte Stoffmenge des verarbeiteten Schrottes S enthalten. Für die vollständig trokkene Separierung werden auch keine Fremdstoffe benötigt, die wieder ausgeschieden werden müssten. Somit ist das System bzw. die Anlage bezüglich Materialfluss geschlossen. Es wurde übrigens festgestellt, dass gerade im gesammelten und rückgeführten Staub nicht unerhebliche Anteile der rückzugewinnenden Edelmetalle enthalten sind.

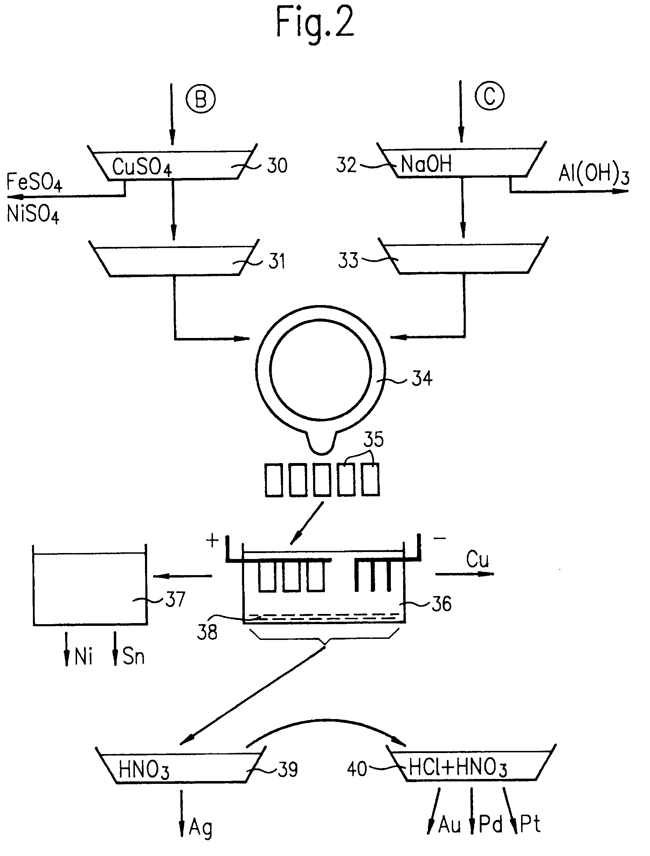

Die Metallfraktionen B und C sind zur pyrolysefreien, nasschemischen und/oder elektrolytischen Trennung in weiteren Verfahrensschritten, wie sie weiter unten beispielsweise anhand der Fig. 2 beschrieben werden, bestimmt und geeignet. Mit dem vorstehend beschriebenen Verfahren lässt sich erreichen, dass der Nichtmetallanteil in den beiden Metallfraktionen höchstens 0,1 Gewichtsprozent beträgt, und je nach Ausgestaltung der Anlage und der Verfahrensschritte, aber auch abhängig von der Art des Schrottes lässt sich der Nichtmetallanteil sogar auf weniger als 0,005 Gewichtsprozent einstellen.

Die nichtmetallische Fraktion A fällt ebenfalls in Granulatform mit Staubanteil an. Mit dem beschriebenen Verfahren lässt sich erreichen, dass der Metallanteil in der nichtmetallischen Fraktion höchstens 0,1 Gewichtsprozent, vorzugsweise weniger als 0,005 Gewichtsprozent beträgt. Dadurch und dank dem stark verminderten Volumen kann die nichtmetallische Fraktion ohne weiteres, d.h. ohne Umweltschädigung, in Deponien gelagert werden, doch ist es auch denkbar, diese Fraktion einer Wiederverwendung zuzuführen.

Die nachfolgende Tabelle 3 bezieht sich auf die beiden Metallfraktionen B und C allein. Sie gibt eine als Beispiel festgestellte prozentuale Verteilung der in den Metallfraktionen enthaltenen Metalle an und ferner den Rückgewinnungsfaktor q, welcher mit der nachstehend beschriebenen, nasschemischen und elektrolytischen Trennung erreicht wurde.

Tabelle 3

|         | %        | q%   |
|---------|----------|------|
| Fe      | 18,0     | 99   |
| Ni      | 7,979    | 99,5 |
| Sn + Pb | 7,144    | 98   |
| Al      | 10,82    | 99   |
| Cu      | 54,57    | 99,8 |
| Ag      | 0,5405   | 99   |
| Au      | 0,21473  | 98,5 |
| Pd      | 0,07171  | 95   |

Ein Beispiel der pyrolysefreien Trennung der Metallfraktionen B und C mittels nasschemischen und elektrolytischen Verfahrensschritten ist in Fig. 2 schematisch dargestellt.

Die magnetische Metallfraktion B mit den Hauptbestandteilen Fe und Cu wird mittels einem als "Kupfer-Zementation" bezeichneten Verfahren von den Eisenmetallen befreit. Sie wird in einen Tank 30 mit Kupfersulfat-Lösung $CuSO_4$ gegeben, in welcher Lösung die Austauschreaktion

$$CuSO_4 + Fe \rightarrow Cu + FeSO_4$$

abläuft. In analoger Weise wird die Fraktion B auch vom Ni-Anteil befreit entsprechend der Austauschreaktion

$$CuSO_4 + Ni \rightarrow Cu + NiSO_4.$$

Das bei der Fe-Umsetzung entstehende Eisensulfat $FeSO_4$ kann weiter verwendet werden und wird insbesondere bei der Abwasserreinigung in grossen Mengen benötigt.

Die nichtmagnetische Metallfraktion C, welche in der Regel grössere Anteile von Aluminium enthält, wird in einen Tank 32 mit Natronlauge NaOH gegeben. Darin wird der Al-Teil ausgelaugt entsprechend der Formel

EP 0 403 695 B2

$$2NaOH + 2H_2O \rightarrow 2NaAlO_2 + 3H_2O.$$

In der Natronlauge zerfällt $NaAlO_2$ in Natron NaOH und Aluminiumhydroxid $Al(OH)_3$, welches ausgefällt wird. Letzteres kann insbesondere bei der Produktion von Keramik weiterverwendet werden.

Die so von Eisenmetallen bzw. Aluminium befreiten, übrig gebliebenen Anteile der Fraktionen B und C (überwiegend Cu) werden durch ein Waschbad geführt (Tanks 31 bzw.33). Sie können dann bei 1300° C aufgeschmolzen (Tiegel 34) und zu Anodenblöcken 35 gegossen werden. Hierbei handelt es sich um einen einfachen Umschmelzvorgang ohne metallurgische Reaktionen.

In einem galvanischen Bad 36 wird sodann das Kupfer aus den Anodenblöcken 35 elektrolytisch abgeschieden. Verbliebene Ni- und Sn-Anteile können in einem weiteren Bad 37 ebenfalls elektrolytisch abgeschieden werden. Der im Bad 36 und gegebenenfalls im Bad 37 sich bildende Bodensatz 38 (Schlamm) enthält im wesentlichen noch die aus dem Geräteschrott gewonnenen, in den Metallfraktionen B und C enthaltenen Edelmetall-Anteile.

Die Edelmetalle können mit an sich bekannten Methoden noch nasschemisch und gegebenenfalls elektrolytisch angereichert bzw. getrennt und raffiniert werden: In einem Tank 39 mit Salpetersäure $HNO_3$ wird zunächst das Silber ausgefällt. Ein weiterer Tank 40 mit Salzsäure HCl und Salpetersäure $HNO_3$ dient zur Ausfällung von Gold, Palladium und Platin. Die auf diese Weise angereicherten, ausgefällten Edelmetalle werden zwecks Endraffination wiederum elektrolytisch abgeschieden.

Wie aus der vorstehenden Beschreibung anhand der Fig. 2 hervorgeht, erfolgt die Trennung der Metallfraktionen B und C ohne pyrolytische Reaktionen und die damit verbundenen Umweltbelastungen. Dies ist vor allem möglich dank der hohen Trenngüte (Reinheit), mit der die Metallfraktionen aus dem vorangehenden Trennverfahren gemäss Beispiel Fig. 1 hervorgehen.

**Patentansprüche**

1. Verfahren zur Verwertung von nichtmetallische und metallische Anteile enthaltendem Geräteschrott, wobei man das Schrottmaterial (S) stufenweise und abwechselnd mechanisch zerkleinert und in Fraktionen trennt,

    - wobei man eine Grobzerkleinerung und eine anschliessende magnetische Separierung des Schrottgemisches in eine magnetische Gemischfraktion (G1) und eine nichtmagnetische Gemischfraktion (G2) durchführt;

    - wobei man die magnetische Gemischfraktion (G1) stufenweise weiter trennt, und zwar trocken, ausschliesslich mechanischphysikalisch und ohne Beimengung von Fremdstoffen, und aus der letzten Trennstufe eine nichtmetallische Fraktion (A) sowie eine magnetische Metallfraktion (B) -beide in Granulatform und mit einem gewissen Staubanteil- gewinnt;

    - wobei man die nichtmagnetische Gemischfranktion (G2) weiter zerkleinert und stufenweise weiter trennt, und zwar trocken, ausschliesslich mechanisch-physikalisch und ohne Beimengung von Fremdstoffen, und aus der letzten Trennstufe eine weitere nichtmetallische Fraktion (A) sowie eine nichtmagnetische Metallfraktion (C) - beide in Granulatform und mit einem gewissen Staubanteil- gewinnt; und

    - wobei man beim Zerkleinern des Geräteschrottes (S) vor der magnetischen Separierung sowie beim Zerkleinern der nichtmagnetischen Gemischfraktion (G2) nach der magnetischen Separierung anfallenden Staub sammelt und das gesammelte Staubgemisch (d) in eine Trennstufe zurückführt;

    - um die gesamte magnetische Metallfraktion (B) sowie die gesamte nichtmagnetische Metallfraktion (C) einer weiteren, ausschliesslich pyrolysefreien, nasschemischen und/oder elektrolytischen Trennung zuzuführen.

2. Verfahren nach Anspruch 1, dadurch gekennzeichnet, dass die weiter zerkleinerte nichtmagnetische Gemischfraktion (G2) vor dem mechanisch-physikalischen Separieren entstaubt wird.

3. Verfahren nach Anspruch 1 oder 2, dadurch gekennzeichnet, dass das beim Zerkleinern und gegebenenfalls beim Entstauben anfallende Staubgemisch pneumatisch gesammelt und ausgefiltert wird und das Staubgemisch (d) zusammen mit der nichtmagnetischen Gemischfraktion (G2) mechanisch-physikalisch separiert wird.

4. Verfahren nach Anspruch 1, dadurch gekennzeichnet, dass die magnetische Gemischfraktion (G1) gesiebt wird und der Siebrückbehalt in die Grobzerkleinerung rezirkuliert wird.

5. Verfahren nach Anspruch 1 oder 2, dadurch gekennzeichnet, dass die weiter zerkleinerte, gegebenenfalls entstaubte nichtmagnetische Gemischfraktion (G2) gesiebt und der Siebrückbehalt in die vorangehende weitere Zerkleinerung rezirkuliert wird.

6. Verfahren nach Anspruch 1, dadurch gekennzeichnet, dass das mechanisch-physikalische Separieren der magnetischen (G1) wie auch der nichtmagnetischen Gemischfraktion (G2) in je mindestens einer elektrostatisch wirkenden Trennstufe erfolgt.

7. Verfahren nach einem der vorangehenden Ansprüche, dadurch gekennzeichnet, dass der magnetischen Metallfraktion (B) mittels Kupfer-Zementation (30) der Eisen-Anteil und der nichtmagnetischen Metallfraktion (C) mittels Laugenbehandlung (32) der Aluminium-Anteil entzogen wird, und dass die verbliebenen Anteile beider Metallfraktionen (B, C) zu Anodenblöcken (35) verarbeitet werden.

8. Verfahren nach Anspruch 7, dadurch gekennzeichnet, dass von den Anodenblöcken (35) mindestens der Kupfer-Anteil elektrolytisch abgeschieden wird und aus dem Bodensatz (38) des Elektrolysebades (36) vorhandene Edelmetall-Anteile nasschemisch und/oder elektrolytisch angereichert werden.

9. Anlage zur Durchführung des Verfahrens nach Anspruch 1, mit mindestens einem ersten und einem zweiten mechanischen Zerkleinerungsaggregat (1, 3) und einem bezüglich Materialfluss zwischen diesen Aggregaten angeordneten Magnetseparator (2), dadurch **gekennzeichnet**,

   - dass zur Trennung des vom Magnetseparator (2) ausgeschiedenen Gemisches (G1) aus magnetischer Metallfraktion und Nichtmetallfraktion mindestens ein erstes mechanisch-physikalisches Trennaggregat (5),
   - und zur Trennung des nach dem Magnetseparator (2) anfallenden, durch das zweite Zerkleinerungsaggregat (3) geführten Gemisches (G2) aus nichtmagnetischer Metallfraktion und Nichtmetallfraktion mindestens ein zweites mechanisch-physikalisches Trennaggregat (10, 11, 12) vorhanden ist,
   - und dass ferner Mittel (22, 9, 23) zur Rückführung von beim Zerkleinern des Geräteschrotts vor der magnetischen Separierung sowie der nichtmagnetischen Gemischfraktion (G2) nach der magnetischen Separierung anfallendem Staub in eines der Trennaggregate (10, 11, 12) vorhanden sind.

10. Anlage nach Anspruch 9, dadurch gekennzeichnet, dass dem mindestens einen ersten Trennaggregat (5) eine Siebvorrichtung (4) vorgeschaltet ist.

11. Anlage nach Anspruch 9, dadurch gekennzeichnet, dass dem mindestens einen zweiten Trennaggregat (10, 11, 12) eine Siebvorrichtung (8) vorgeschaltet ist.

12. Anlage nach Anspruch 11, dadurch gekennzeichnet, dass zwischen dem zweiten Zerkleinerungsaggregat (3) und der Siebvorrichtung (8) eine Staubabscheideanordnung (6, 7) vorgesehen ist.

13. Anlage nach Anspruch 12, dadurch gekennzeichnet, dass die Staubabscheideanordnung einen Windsichter (6) und/oder einen Zyklon (7) enthält.

14. Anlage nach Anspruch 9 oder 12, dadurch gekennzeichnet, dass die Zerkleinerungsaggregate (1, 3) und gegebenenfalls die Staubabscheideanordnung (6, 7) an einen pneumatisch arbeitenden Staubsammler (9) angeschlossen sind.

15. Anlage nach einem der Ansprüche 9 bis 14, dadurch gekennzeichnet, dass als mechanisch-physikalische Trennaggregate (5, 10, 11, 12) elektrostatisch arbeitende Separatoren verwendet sind.

16. Anlage nach einem der Ansprüche 9 bis 15, dadurch gekennzeichnet, dass mindestens zur Trennung des Gemisches (G2) aus nichtmagnetischer Metallfraktion und Nichtmetallfraktion mehrere Trennaggregate (10, 11, 12) in Kaskade angeordnet sind.

## Claims

1. Process for recycling scrap appliances containing non-metals and metals, involving stepwise alternate mechanical size reduction and fractionation of the scrap material (S),

   - whereby a coarse size reduction followed by magnetic separation of the mixture of scrap is carried out, and a magnetic mixture fraction (G1) and a non-magnetic mixture fraction (G2) is obtained thereby;

- whereby a further, dry separation of the magnetic mixture fraction (G1) is carried out in stages, exclusively by mechanical physical means and without the addition of foreign substances, and from the final separation stage a non-metallic fraction (A) and a magnetic metal fraction (B) is obtained, both fractions in granule form with a certain dust content;
- whereby a further size reduction and further, dry separation of the non-magnetic mixture fraction (G2) is carried out in stages, exclusively by mechanical physical means and without the addition of foreign substances, and from the final separation stage another non-metallic fraction (A) and a non-magnetic metal fraction (C) is obtained, both fractions in granule form with a certain dust content; and
- wherein dust produced during size reduction of the scrap material (S) before magnetic separation and during size reduction of the non-magnetic mixture fraction (G2) is being collected and the collected dust mixture (d) is being returned to a separation stage;

in order to subject the total magnetic metal fraction (B) and the total non-magnetic metal fraction (C) to a supplemental, fully non-pyrolytic, wet-chemical and/or electrolytic separation process.

2. Process according to claim 1, characterised by removing dust from the non-magnetic mixture fraction (G2) which has undergone additional size reduction, prior to separation thereof using mechanical physical means.

3. Process according to claim 1 or 2, characterised in that the dust mixture produced during size reduction and, if applicable, during dust removal, is pneumatically collected and filtered out and the dust mixture (d) is separated along with the non-magnetic mixture fraction (G2) using mechanical physical means.

4. Process according to claim 1, characterised by screening the magnetic mixture fraction (G1) and recirculating material that does not pass through the screen to the coarse size reduction operation.

5. Process according to claim 1 or 2, characterised by screening the non-magnetic mixture fraction (G2) which has undergone additional size reduction and, if applicable, dust removal, and recirculating material that does not pass through the screen to the preceding additional size reduction operation.

6. Process according to claim 1, characterised by performing the mechanical physical separation of both the magnetic (G1) and the non-magnetic (G2) mixture fractions In at least one respective electrostatic separation stage.

7. Process according to any of the preceding claims, characterised by using copper cementation (30) to remove the iron content from the magnetic metallic fraction (B) and using leaching (32) to remove the aluminium content from the non-magnetic metallic fraction (C), and by processing the remaining materials of both metallic fractions (B, C) into anode blocks (35).

8. Process according to claim 7, characterised by electrolytically removing at least the copper content from the anode blocks (35) and enriching noble metals present in the sediment (38) of the electrolysis bath (36) by wet chemical and/or electrolytic means.

9. Installation for carrying out the process according to claim 1, comprising at least a first and a second mechanical size reduction unit (1, 3) and a magnetic separator (2) arranged between said units as regards the flow of materials, characterised in that

- at least a first mechanical physical separating unit (5) is provided to separate the mixture (G1) comprising magnetic metallic and non-metallic fractions removed by the magnetic separator (2),
- and at least a second mechanical physical separating unit (10, 11, 12) is provided to separate the mixture (G2) comprising non-magnetic metallic and non-metallic fractions produced following the magnetic separator (2) and passed through the second size reduction unit (3), are provided
- and also that means (22, 9, 23) are provided for returning to one of the separating units (10, 11, 12) dust produced during size reduction of the scrap appliances prior to magnetic separation and of the non-magnetic mixture fraction (G2) following magnetic separation.

10. Installation according to claim 9, characterised by arranging a screening apparatus (4) upstream of the at least one first separating unit (5).

11. Installation according to claim 9, characterised by arranging a screening apparatus (8) upstream of the at least one second separating unit (10, 11, 12).

12. Installation according to claim 11, characterised by providing a dust removal assembly (6, 7) between the second size reduction unit (3) and the screening apparatus (8).

13. Installation according to claim 12, characterised in that the dust removal assembly contains an air classifier (6) and/or cyclone dust extractor (7).

14. Installation according to claim 9 or 12, characterised in that the size reduction units (1, 3) and if appropriate the dust removal assembly (6, 7) are linked to a pneumatic dust collector (9).

15. Installation according to any of claims 9 to 14, characterised by the use of electrostatic separators as the separating units (5, 10, 11, 12) employing mechanical physical means.

16. Installation according to any of claims 9 to 15, characterised in that at least for separating the mixture (G2) comprising the non-magnetic metallic fraction and non-metallic fraction a plurality of separating units (10, 11, 12) are disposed in a cascade arrangement.

**Revendications**

1. Procédé pour la récupération de rebuts d'appareils qui contiennent des portions non métalliques et des portions métalliques, dans lequel la matière de rebuts (S) est fragmentée mécaniquement et divisée en fractions, par étapes et en alternance,

    - dans lequel on soumet le mélange de rebuts à une fragmentation grossière, suivie d'une séparation magnétique, pour obtenir une fraction mixte magnétique (G1) et une fraction mixte non magnétique (G2);
    - dans lequel on sépare de suite la fraction mixte magnétique (G1) par étapes, à sec, exclusivement par voie mécanique-physique et sans addition de matières étrangères, et on tire du dernier étage de séparation une fraction non métallique (A) ainsi qu'une fraction métallique magnétique (B), tous les deux sous la forme d'un granulé ayant une certaine teneur en poussière;
    - dans lequel on fragmente et sépare de suite par étapes la fraction mixte non magnétique (G2), à sec, exclusivement par voie mécanique-physique et sans addition de matières étrangères, et on tire du dernier étage de séparation une autre fraction non métallique (A) ainsi qu'une fraction métallique non magnétique (C), tous les deux sous la forme d'un granulé ayant une certaine teneur en poussière;
    - et dans lequel on collecte la poussière produite lors de la fragmentation de la matière de rebuts (S) avant la séparation magnétique, ainsi que lors de la fragmentation de la fraction mixte non magnétique (G2) après la séparation magnétique, et on renvoie le mélange de poussières (d) collecté dans un étage de séparation;
    - afin de soumettre toute la fraction métallique magnétique (B) ainsi que toute la fraction métallique non magnétique (C) à une séparation supplémentaire entièrement sans pyrolyse, mais chimique humide et/ou électrolytique.

2. Procédé selon la revendication 1, caractérisé en ce que la fraction mixte non magnétique (G2), de nouveau fragmentée, est dépoussiérée avant la séparation mécanique-physique.

3. Procédé salon la revendication 1 ou 2, caractérisé en ce que le mélange de poussières produit lors de la fragmentation et éventuellement lors du dépoussiérage est collecté pneumatiquement et filtré, et le mélange de poussières (d) est séparé par voie mécanique-physique, avec la fraction mixte non magnétique (G2).

4. Procédé selon la revendication 1, caractérisé en ce que la fraction mixte magnétique (G1) est criblée et le refus du crible est recyclé à la fragmentation grossière.

5. Procédé selon la revendication 1 ou 2, caractérisé en ce que la fraction mixte non magnétique (G2), soumise à une nouvelle fragmentation et éventuellement dépoussiérée est criblée et le refus du crible est recyclé à l'autre fragmentation précédente.

6. Procédé selon la revendication 1, caractérisé en ce que la séparation mécanique-physique de la fraction mixte magnétique (G1) ainsi que la fraction mixte non magnétique (G2) s'effectuent chacune dans au moins un étage de séparation à action électrostatique.

7. Procédé selon une des revendications précédentes, caractérisé en ce que la fraction métallique magnétique (B) est débarassée de la proportion ferreuse au moyen d'une cémentation au cuivre (30) et la fraction métallique non magnétique (C) est débarassée par un lessivage (32) de la proportion d'aluminium, et en ce que les proportions restantes des deux fractions métalliques (B, C) sont transformées en blocs d'anodes (35).

8. Procédé selon la revendication 7, caractérisé en ce que, des blocs d'anodes (35), on sépare au moins la proportion de cuivre par voie électrolytique et qu'on enrichit les proportions de métaux précieux présentes dans le dépôt (38) du bain d'électrolyse (36) par voie chimique humide et/ou électrolytique.

9. Installation pour la mise en oeuvre du procédé selon la revendication 1, comprenant au moins un premier et un deuxième groupe de fragmentation mécanique (1, 3) et un séparateur magnétique (2) disposé entre ces deux groupes, sous l'aspect du flux de matière, caractérisé en ce que:

- pour la séparation du mélange (G1) séparé par le séparateur magnétique (2), composé d'une fraction métallique magnétique et d'une fraction non métallique, il est prévu au moins un premier groupe de séparation (5) opérant par voie mécanique-physique
- et, pour la séparation du mélange (G2) composé d'une fraction métallique non magnétique et d'une fraction non métallique et obtenu à la suite du séparateur magnétique (2) et du passage à travers le deuxième groupe de fragmentation (3), il est prévu au moins un deuxième groupe de séparation mécanique-physique (10, 11, 12),
- et en ce qu'il est prévu en outre des moyens (22, 9, 23) pour renvoyer à l'un des groupes de séparation (10, 11, 12) la poussière produite lors de la fagmentation des rebuts d'appareils avant la séparation magnétique, ainsi que de la fraction mixte non magnétique (G2) après la séparation magnétique.

10. Installation selon la revendication 9, caractérisée en ce qu'un dispositif de criblage (4) est placé en amont d'au moins un premier groupe de séparation (5).

11. Installation selon la revendication 9, caractérisée en ce qu'un dispositif de criblage (8) est placé en amont d'au moins un deuxième groupe de séparation (10, 11, 12).

12. Installation selon la revendication 11, caractérisée en ce qu'un dispositif (6, 7) de séparation des poussières est prévu entre le deuxième groupe de fragmentation (3) et le dispositif de criblage (8).

13. Installation selon la revendication 12, caractérisée en ce que le dispositif de séparation des poussières comprend un épurateur pneumatique (6) et/ou un cyclone (7).

14. Installation selon la revendication 9 ou 12, caractérisée en ce que les groupes de fragmentation (1, 3) et éventuellement le dispositif (6, 7) de séparation des poussières sont raccordés à un collecteur de poussière (9) à fonctionnement pneumatique.

15. Installation selon une des revendications 9 à 14, caractérisée en ce qu'on utilise comme groupes de séparation mécanique-physique (5, 10, 11, 12) des séparateurs à fonctionnement électrostatique.

16. Installation selon une des revendications 9 à 15, caractérisée en ce que plusieurs groupes de séparation (10, 11, 12) sont disposés en cascade au moins pour la séparation du mélange (G2) composé de la fraction métallique non magnétique et de la fraction non métallique.

# Fig.1

# Fig.2